# EUROPÄISCHE PATENTANMELDUNG

(11) **EP 1 440 840 A2**
(43) Veröffentlichungstag der Anmeldung: **28.07.2004**
(21) Anmeldenummer: 03027595.2
(22) Anmeldetag: 02.12.2003
(51) Int. Cl.: B60N 2/24, B60N 2/68, B60N 2/70, B60R 22/26

(54) **Gepolsterter Fahrgastsitz mit Sicherheitsgurt**

(30) Priorität: 24.01.2003 DE 10302942
(71) Anmelder: Vogelsitze GmbH, 76228 Karlsruhe (DE)
(72) Erfinder: Bilfinger, Jan, 76228 Karlsruhe (DE)
(74) Vertreter: Dimmerling, Heinz, Dipl.-Ing.

(57) **Zusammenfassung**

Ein Gepolsterter Fahrgastsitz für Personenbeförderungsfahrzeuge, insbesondere für Busse und Bahnen, mit einem Rückenteil (1), welches einen Trägerrahmen (2) aufweist, an welchem einerseits die Polsterung (4) befestigt ist und andererseits ein Rückenteilabschluß (5) befestigt ist, welcher das Rückenteil (1) von hinten abschließt, und welcher Trägerrahmen (2) im oberen Bereich eine Querstrebe (3) hat, an welcher ein Gurtumlenkelement (7) befestigbar ist, ist dadurch gekennzeichnet, daß der Rückenteilabschluß (5) die Polsterung (4) wenigstens teilweise seitlich umfaßt, und die Querstrebe (3) Befestigungselemente (6) aufweist, mittels welcher das Gurtumlenkelement (7) an der Querstrebe (3) befestigbar ist.

## Beschreibung

Die Erfindung betrifft einen gepolsterten Fahrgastsitz für Personenbeförderungsfahrzeuge, insbesondere für Busse und Bahnen, nach dem Oberbegriff des Anspruchs 1, mit einem Rückenteil, welches einen Trägerrahmen aufweist, an welchem einerseits die Polsterung befestigt ist und andererseits ein Rückenteilabschluß befestigt ist, welcher das Rückenteil von hinten abschließt, und welcher Trägerrahmen im oberen Bereich eine Querstrebe hat, an welcher ein Gurtumlenkelement befestigbar ist.

Ein derartiger Fahrgastsitz ist im Stand der Technik hinlänglich bekannt und wird in Fahrzeugen des öffentlichen Personennahverkehrs ebenso wie in Reisebussen, Kleinbussen oder PKW eingesetzt. Weist der Fahrgastsitz einen Sicherheitsgurt auf, kann der Retraktor des Sicherheitsgurtes unterhalb des Sitzteils angeordnet sein, wobei der Gurt dann im Rückenteil zwischen Polsterung und Rückenteilabschluß nach oben verläuft. Das Gurtumlenkelement ist in entsprechender Höhe am Trägerrahmen des Rückenteils befestigt.

Da der Rückenteilabschluß regelmäßig als Platte ausgebildet ist, erstreckt sich die Polsterung beziehungsweise ein gegebenenfalls vorhandener Bezug der Polsterung nach hinten bis an beziehungsweise über den Rückenteilabschluß. Es ist daher erforderlich, in der Polsterung und gegebenenfalls im Bezug eine Öffnung auszubilden, durch die sich der Sicherheitsgurt nach vorne erstrecken kann.

Dies ist sehr nachteilig, da hierdurch bereits bei der Herstellung der Polsterung unterschieden werden muß, ob die Polsterung für einen Fahrgastsitz mit Sicherheitsgurt oder ohne Sicherheitsgurt verwendet werden soll. Somit müssen unterschiedliche Polsterungen hergestellt und am Lager gehalten werden, was sich nachteilig auf die Kosten auswirkt. Des weiteren ist es erforderlich, unterschiedliche Trägerrahmen zu verwenden, nämlich solche mit Gurtumlenkelement und solche ohne Gurtumlenkelement. Auch dies wirkt sich sehr nachteilig auf die Kosten aus.

Es ist Aufgabe der Erfindung, einen eingangs genannten Fahrgastsitz derart auszubilden, daß er auf einfache Weise mit einem Sicherheitsgurt versehen werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein gepolsterter Fahrgastsitz für Personenbeförderungsfahrzeuge, insbesondere für Busse und Bahnen, mit einem Rückenteil, welches einen Trägerrahmen aufweist, an welchem einerseits die Polsterung befestigt ist und andererseits ein Rückenteilabschluß befestigt ist, welcher das Rückenteil von hinten abschließt, und welcher Trägerrahmen im oberen Bereich eine Querstrebe hat, an welcher ein Gurtumlenkelement befestigbar ist, dadurch gekennzeichnet, daß der Rückenteilabschluß die Polsterung wenigstens teilweise seitlich umfaßt, und die Querstrebe Befestigungselemente aufweist, mittels welcher das Gurtumlenkelement an der Querstrebe befestigbar ist.

Dadurch, daß der Rückenteilabschluß die Polsterung wenigstens teilweise seitlich umfaßt, wird in vorteilhafter Weise die Möglichkeit eröffnet, den Gurt zwischen der Polsterung und der seitlichen Umfassung des Rückenteilabschlusses nach vorne zu führen. Es ist hierdurch nicht mehr erforderlich, in der Polsterung beziehungsweise in dem Bezug eine Öffnung auszubilden, durch die der Gurt nach vorne geführt wird. Somit läßt sich in vorteilhafter Weise eine einheitliche Polsterung beziehungsweise ein einheitlicher Bezug für Fahrgastsitze mit oder ohne Sicherheitsgurt verwenden.

Dadurch, daß die Querstrebe Befestigungselemente aufweist, mittels welcher das Gurtumlenkelement an der Querstrebe befestigbar ist, läßt sich das Gurtumlenkelement auf einfache Weise mit dem Trägerrahmen verbinden. Je nach Bedarf kann ein Trägerrahmen somit bei der Montage des Fahrgastsitzes mit einem Gurtumlenkelement versehen werden. Es ist somit auch nicht mehr erforderlich, unterschiedliche Trägerrahmen herzustellen und am Lager zu halten.

In vorteilhafter Weise sind die Befestigungselemente als Öffnungen ausgebildet, in welche am Gurtumlenkelement ausgebildete Zapfen eingreifen. Hierdurch läßt sich das Gurtumlenkelement in sehr einfacher Weise durch Einstecken der Zapfen in die Öffnungen mit dem Trägerrahmen verbinden. Soll der Fahrgastsitz nicht mit einem Sicherheitsgurt ausgestattet werden, wird lediglich darauf verzichtet, ein Gurtumlenkelement am Trägerrahmen zu befestigen.

Sehr vorteilhaft ist eine Ausführungsform der Erfindung, bei der das Gurtumlenkelement eine Lasche aufweist, welche sich im eingebauten Zustand des Gurtumlenkelements in einem Abstand etwa parallel zu dem die Polsterung seitlich umfassenden Bereich des Rückenteilabschlusses erstreckt. Durch die Lasche wird in vorteilhafter Weise erreicht, daß die Polsterung im Bereich der Lasche nicht bis an den die Polsterung seitlich umfassenden Bereich des Rückenteilabschlusses heranreicht. Es entsteht hierdurch zwischen den die Polsterung seitlich umfassenden Bereich des Rückenteilabschlusses und der Lasche ein Spalt, durch den sich der Gurt nach vorne erstrecken kann. Soll ein Fahrgastsitz nicht mit einem Sicherheitsgurt versehen werden, entfällt das Gurtumlenkelement, wodurch die Polsterung bis an den seitlich umlaufenden Bereich des Rückenteilabschlusses heranreicht und kein Spalt vorhanden ist.

In besonders vorteilhafter Weise weist das Gurtumlenkelement an seinen Seiten Führungsschienen auf, mittels welcher der Rückenteilabschluß an dem Gurtumlenkelement befestigbar ist. Hierdurch läßt sich der Rückenteilabschluß auf einfache Weise an dem Rückenteil befestigen.

Des weiteren kann das Gurtumlenkelement durch die Führungsschienen mit der seitlichen Umfassung des Rückenteilabschlusses einen Auslaßkanal für den Gurt bilden, wie dies bei einer weiteren besonderen Ausführungsform der Erfindung vorgesehen ist. Hierdurch wird der Gurt auf einfache Weise nach vorne geführt.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Darstellung eines erfindungsgemäßen Fahrgastsitzes ohne Polsterung mit Sicherheitsgurt,
- Figur 2: einen vergrößerten Ausschnitt des oberen Bereichs des Rückenteils des in Figur 1 dargestellten Fahrgastsitzes jedoch ohne Sicherheitsgurt,
- Figur 3: ein Gurtumlenkelement in perspektivischer Darstellung,
- Figur 4: das in Figur 3 dargestellte Gurtumlenkelement von vorne und
- Figur 5: den in Figur 1 dargestellten Fahrgastsitz mit Polsterung.

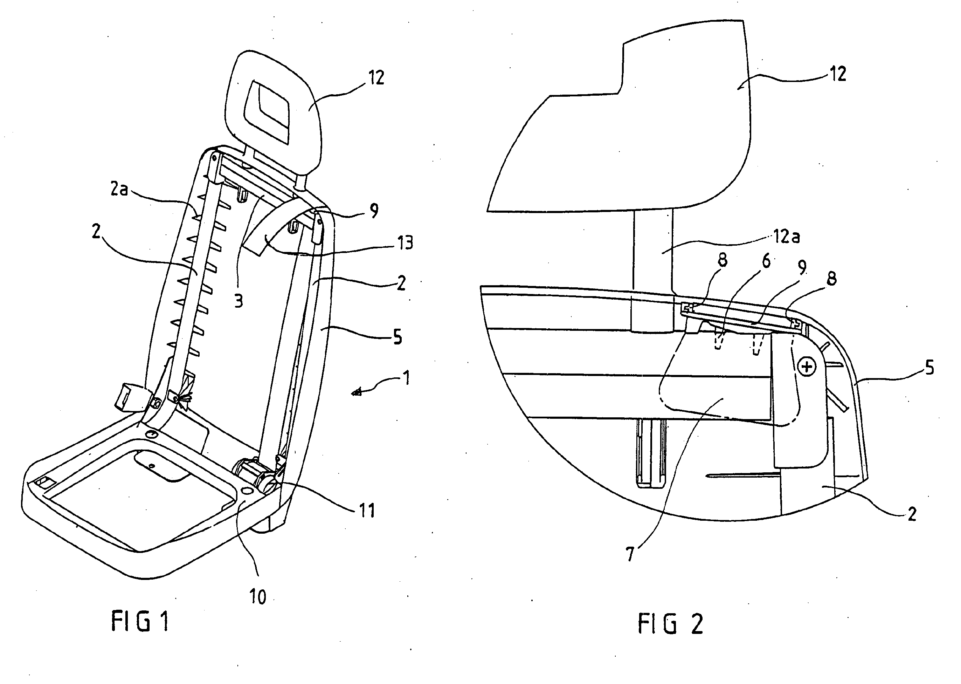

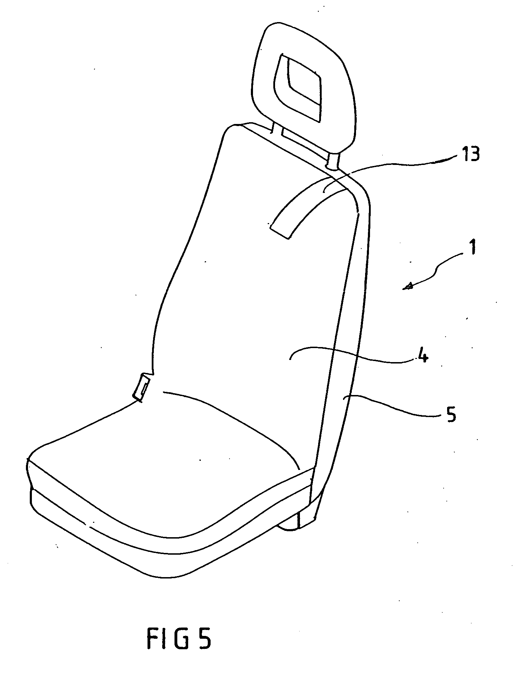

Wie insbesondere Figur 1 entnommen werden kann, weist ein Rückenteil 1 eines Fahrgastsitzes einen Trägerrahmen 2 auf, welcher im oberen Bereich eine Querstrebe 3 hat. Am Trägerrahmen 2 sind Abstandselemente 2a angeordnet, auf welchen ein Rückenteilabschluß 5 aufliegt. Der Rückenteilabschluß 5 ist als Schale ausgebildet, wodurch er eine Polsterung 4 seitlich umfaßt, wie dies insbesondere Figur 5 entnommen werden kann.

Unterhalb eines Sitzteils 10 ist ein Retraktor 11 eines Sicherheitsgurtes angeordnet. Der Gurt 13 des Sicherheitsgurtes erstreckt sich zwischen der Polsterung und dem Rückenteilabschluß 5 nach oben. Im oberen Bereich des Rückenteils 1 ist an der Querstrebe 3 ein Gurtumlenkelement 7 befestigt, um welches der Gurt 13 um etwa 90 Grad nach vorne umgelenkt wird.

Wie insbesondere Figur 2 entnommen werden kann, weist die Querstrebe 3 Öffnungen auf, in welche am Gurtumlenkelement 7 ausgebildete Zapfen 6 eingesteckt sind. Hierdurch ist das Gurtumlenkelement 7 fest mit der Querstrebe 3 und damit mit dem Trägerrahmen 2 verbunden.

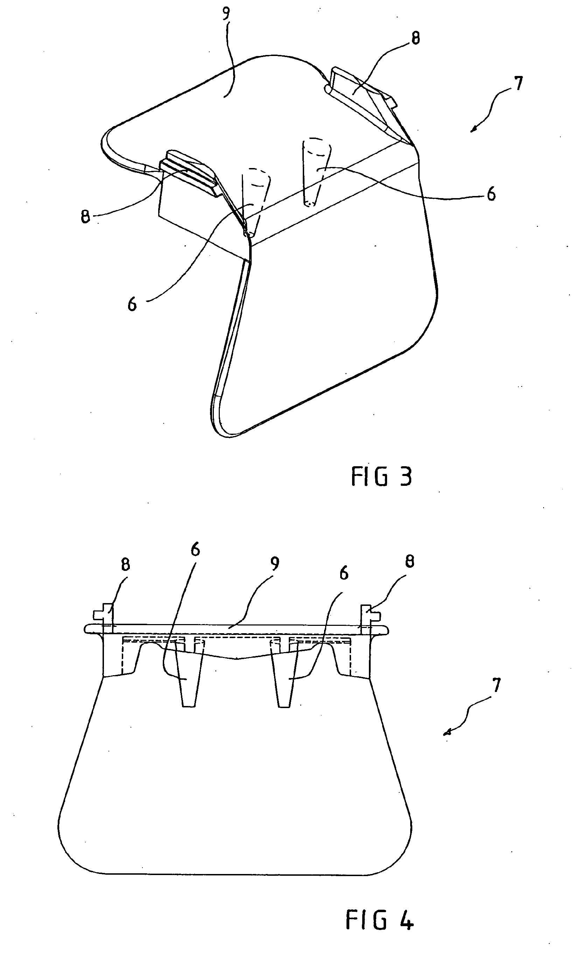

Wie insbesondere den Figuren 3 und 4 entnommen werden kann, weist das Gurtumlenkelement 7 eine abgewinkelte Lasche 9 auf, welche im eingebauten Zustand etwa waagerecht verläuft. Hierdurch kann die Polsterung in diesem Bereich nicht bis an den die Polsterung 4 seitlich umfassenden Bereich des Rückenteilabschlusses 5 heranreichen, so daß zwischen der seitlichen Umfassung des Rückenteilabschlusses 5 und der Lasche 9 ein Spalt entsteht, durch den sich der Gurt 13 nach vorne erstrecken kann.

Die Lasche 9 weist die Zapfen 6 auf. Die Zapfen 6 sind konisch ausgebildet, wodurch das Gurtumlenkelement 7 nach dem Einstecken der Zapfen 6 in die Öffnungen 6 fest und wackelfrei mit der Querstrebe 3 des Trägerrahmens 2 verbunden ist. Des weiteren weist der im eingebauten Zustand waagerecht verlaufende Teil des Gurtumlenkelements 7 an seinen beiden Längsseiten Führungsschienen 8 auf. Durch die Führungsschienen 8 wird einerseits erreicht, daß der Gurt 9 seitlich auf dem Gurtumlenkelement 7 fixiert ist. Des weiteren läßt sich mittels der Führungsschienen 8 der Rükkenteilabschluß 5 mit dem Gurtumlenkelement 7 verbinden. Hierzu sind an der seitlichen Umfassung des Rückenteilabschlusses 5 Profilteile ausgebildet, in welche die Führungsschienen 8 einschiebbar sind.

Durch den im eingebauten Zustand waagerecht verlaufenden Teil des Gurtumlenkelements 7 und der Verbindung des seitlichen Teils des Rückenteilabschlusses 5 mittels Führungsschienen 8 wird ein Auslaßkanal für den Gurt 13 gebildet, durch den sich der Gurt 9 nach vorne erstrecken kann.

Das Gurtumlenkelement 7 ist derart an der Querstrebe 3 des Trägerrahmens 2 angeordnet, daß es sich seitlich neben einer Befestigungsstrebe 12a einer Kopfstütze 12 befindet. Die Kopfstütze 12 ist mit ihren Befestigungsstreben 12a in der Querstrebe 3 eingesteckt.

## Patentansprüche

1. Gepolsterter Fahrgastsitz für Personenbeförderungsfahrzeuge, insbesondere für Busse und Bahnen, mit einem Rückenteil (1), welches einen Trägerrahmen (2) aufweist, an welchem einerseits die Polsterung (4) befestigt ist, und andererseits ein Rückenteilabschluß (5) befestigt ist, welcher das Rückenteil (1) von hinten abschließt, und welcher Trägerrahmen (2) im oberen Bereich eine Querstrebe (3) hat, an welcher ein Gurtumlenkelement (7) befestigbar ist,
**dadurch gekennzeichnet,**
**daß** der Rückenteilabschluß (5) die Polsterung (4) wenigstens teilweise seitlich umfaßt, und die Querstrebe (3) Befestigungselemente (6) aufweist, mittels welcher das Gurtumlenkelement (7) an der Querstrebe (3) befestigbar ist.

2. Fahrgastsitz nach Anspruch 1,
**dadurch gekennzeichnet,**
**daß** die Befestigungselemente (6) Öffnungen sind, in welche am Gurtumlenkelement (7) ausgebildete Zapfen (6a) eingreifen.

3. Fahrgastsitz nach Anspruch 1 oder 2,
**dadurch gekennzeichnet,**
**daß** das Gurtumlenkelement (7) eine Lasche (9) aufweist, welche sich im eingebauten Zustand des Gurtumlenkelements (7) in einem Abstand etwa parallel zu dem die Polsterung (4) seitlich umfassenden Bereich des Rückenteilabschlusses (5) erstreckt.

4. Fahrgastsitz nach einem der Ansprüche 1 bis 3,
**dadurch gekennzeichnet,**
**daß** das Gurtumlenkelement (7) an seinen Seiten Führungsschienen (8) aufweist, mittels welcher der Rückenabschluß (5) an dem Gurtumlenkelement (7) befestigbar ist.
